# EUROPEAN PATENT APPLICATION

(11) **EP 2 306 291 A2**
(43) Date of publication of application: **06.04.2011**
(21) Application number: 10171686.8
(22) Date of filing: 03.08.2010
(51) Int. Cl.: G06F 3/048

(54) **Information display device**

(30) Priority: 30.09.2009 JP 2009227169; 30.03.2010 JP 2010077254; 28.04.2010 JP 2010103853
(71) Applicant: AISIN AW CO., LTD., Anjo-shi, Aichi-ken 444-1192 (JP)
(72) Inventor: Ogawa, Tsuyoshi, Anjo-shi, Aichi-ken 444-1192 (JP); Yamamoto, Kazuyoshi, Anjo-shi, Aichi-ken 444-1192 (JP); Sakai, Takamitsu, Anjo-shi, Aichi-ken 444-1192 (JP)
(74) Representative: Delumeau, François Guy

(57) **Abstract**

The invention provides an information display device (1) which includes: a display part (3) that displays an image; a touch panel (2) that is provided in front of the display part and detects a drag operation; a function execution unit (11) that executes a predetermined function according to the drag operation; a touched-point number judgment unit (4) that judges the number of touched points at the drag operation detected by the touch panel; and a function control unit (5) that changes control volume of the predetermined function to be executed by the function execution unit according to a judgment result of the touched-point number judgment unit (4).

## Description

### BACKGROUND OF THE INVENTION

### 1. Field of the Invention

The present invention relates to an information display device that performs a predetermined function according to a touch panel operation.

### 2. Description of the Related Art

In recent years, portable electronic devices such as a cellular phone, a PDA (Personal Digital Assistant), an electronic dictionary, and a music player are prevalent. In order to downsize an operation part that a user operates, widely used portable electronic devices include a transparent-type touch panel that detects a touch and a touched point in front of a display part. On the transparent type touch panel, the user can perform an input, looking at a display screen on the display part where selection items to select icons, file names, and the like are displayed, and touching a part of the touch panel that corresponds to a display position of each item. Although the portable electronic devices have a display screen with a small area, more and more selection items such as the icons, the file names, and the like are getting displayable along with improvement of resolution of the display screen.

In addition, display devices are used, in which, when displaying an image whose size is over the display screen, a display area to display on the display screen is set to a part of the area of the image, and a scroll display is performed by moving the display area on the image through the user touching the touch panel provided in front of the display screen. For example, Japanese Patent Application; Publication No. JP-A-6-149531 discloses a scroll control device, in which the scroll display is possible by the user performing a drag operation on the touch panel.

### SUMMARY OF THE INVENTION

In the scroll control device disclosed by Japanese Patent Application Publication No. JP-A-6-149531, a drag operation range of the user is limited to the area of the transparent-type touch panel provided on the display screen of a display device. Therefore, the display area does not reach the area that the user desires to display with one operation if such area is too far from the area of the image that is currently displayed in the display screen. In this case, the user needs to performs the drag operation a plurality of times till the desired image is displayed.

In light of the problems described above, it is an object of the present invention to provide an information display device, in which the user's intent can be reflected with less number of drag operations, without performing the drag operation a lot of times.

An information display device according to a first aspect of the present invention includes: a display part that displays an image; a touch panel that is provided in front of the display part and detects a drag operation; a function execution unit that executes a predetermined function according to the drag operation; a touched point number judgment unit that judges the number of touched points at the drag operation detected by the touch panel; and a function control unit that changes control volume of the predetermined function to be executed by the function execution unit according to a judgment result of the touched point number judgment unit.

According to the information display device in a second aspect of the present invention, control of a scroll function is performed in the information display device according to the first aspect of the present invention.

According to the information display device in a third aspect of the present invention, control of a scale change function is performed in the information display device according to the first aspect of the present invention.

According to the information display device in a fourth aspect of the present invention, a movement volume of a scroll increases as the number of touched points increases in the information display device according to the second aspect of the present invention.

In addition, according to the information display device in a fifth aspect of the present invention, a change volume of a scale change increases as the number of touched points increases in the information display device according to the third aspect of the present invention.

According to the information display device in a sixth aspect of the present invention, in the information display device according to any one of the first to fifth aspects of the present invention, if the number of touched points is two or more, a change of the control volume of the predetermined function is inhibited based on a position relation of the respective touched points.

According to the information display device in a seventh aspect of the present invention, in the information display device according to the sixth aspect of the present invention, if the number of touched points is two or more and positions of the respective touched points are separated by a predetermined distance or more, the control volume of the predetermined function is not changed.

According to the information display device in an eighth aspect of the present invention, in the information display device according to the Sixth aspect of the present invention, if the number of touched points is two or more and movement directions of the respective touched points are different, the control volume of the predetermined function is not changed.

Further, according to the information display device in a ninth aspect of the present invention, in the information display device according to the sixth aspect of the present invention, if the number of touched points is two or more and a difference in movement speed between the respective touched points is a predetermined speed or more, the control volume of the predetermined function is not changed.

As described above, the information display device according to the present invention includes: a display part that displays an image; a touch panel that is provided in front of the display part and detects a drag operation; a function execution unit that executes a predetermined function according to the drag operation; a touched-point number judgment unit that judges the number of touched points at the drag operation detected by the touch panel; and a function control unit that changes control volume of the predetermined function to be executed by the function execution unit according to a judgment result of the touched-point number judgment unit. Therefore, the user does not need to repeat a touch operation a lot of times, but the user's intent can be reflected with less number of operations.

### BRIEF DESCRIPTION OF THE DRAWINGS

FIG. 1 is a block diagram showing an internal hardware structure of a display device.
FIGS. 2A, 2B, and 2C are schematic drawings showing an example of a scroll display according to a first embodiment.
FIG. 3 is a flowchart showing a procedure of scroll display processing according to the first embodiment.
FIG. 4 is a flowchart showing a procedure of touched point number judgment processing.
FIGS. 5A, 5B, 5C, and 5D are schematic drawings showing an example of a scale change display according to a second embodiment.
FIG. 6 is a flowchart showing a procedure of scale change display processing according to the second embodiment.
FIG. 7 show an example that a drag operation with 2 touched points is not determined.
FIG. 8 shows an example that a drag operation with 2 touched points is not determined.
FIG. 9 shows an example that a drag operation with 2 touched points is not determined.

### DETAILED DESCRIPTION OF THE PREFERRED EMBODIMENT

An information display device according to the present invention is described in detail below with reference to embodiments in conjunction with the accompanying drawings.

### [First embodiment]

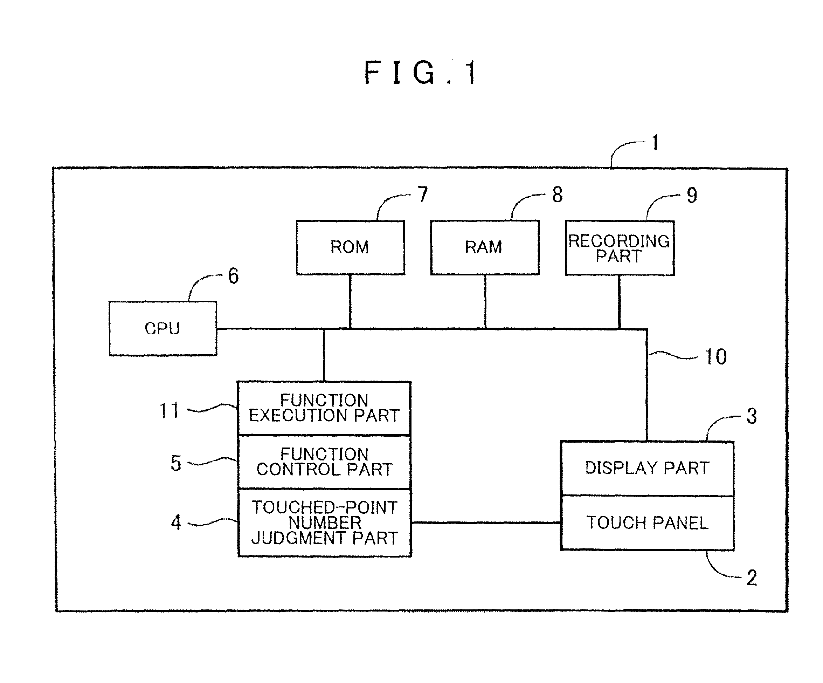

The present embodiment is described in detail below with reference to the drawings. FIG. 1 is a block diagram showing an internal hardware structure of an information display device 1. As shown in FIG. 1, the information display device 1 includes: a touch panel 2 that outputs a touch panel signal indicating a touch to a panel surface by the user's finger or the like and its touch position; a display part 3 that has the touch panel 2 in front of a display screen; a function execution part 11 that executes a predetermined function according to a touch operation; a touched point number judgment part 4 that detects a touch panel signal and judges the number of touched points; and a function control part 5 that performs function control according to judgment result of the touched point number judgment part 4.

In addition, the information display device 1 includes a CPU (Central Processing Unit) 6 as a control part, a ROM (Read Only Memory) 7 that records a computer program to be executed in the CPU, a RAM (Random Access Memory) 8, and a recording part 9 that records map data for generating a map image to display on the display part 3. The CPU 6, which is connected to the respective hardware parts in the information display device 1 through a bus 10, controls the respective hardware parts and executes processing of various kinds of software by reading and executing in the RAM 8 a computer program recorded in the ROM 7.

The user's finger physically contacts the touch panel 2 and slides on a surface of the touch panel 2 keeping the contact, such that the change volume of the touched position indicated by a touch panel signal becomes equal to or more than a predetermined distance. Such operation is generally called a drag operation. The distance utilized for determination of the drag operation may be empirically acquired based on the change volume of the touched position detected by the touch panel 2 toward operations that the user does not intend the drag operation, and recorded in the ROM 7 or the recording part 9. With the above structure, a first embodiment of the present invention is described.

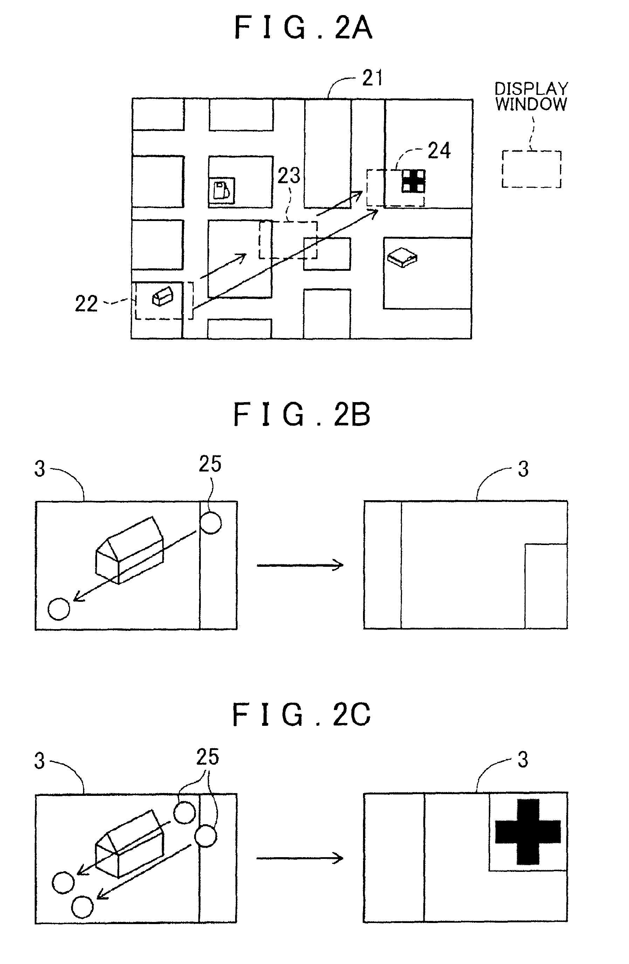

FIGS. 2A, 2B, and 2C are schematic drawings showing an example of a display screen according to the first embodiment, and show a scroll display by the drag operation on a map screen. FIG. 2A shows a map image 21 generated from the map data, which is recorded in the recording part 9. An image area of the map image 21 displayed in the display part 3 is determined by a display window. Here, the map image when the display window is located at a position 22 is displayed. If the user desires to display the image of a position 24, the user performs a scroll by the drag operation.

FIG. 2B is an explanatory drawing of the drag operation in case that the number of touched points is one. For example, the user performs the drag operation with one finger in a direction of an arrow from a position of a touched point 25 in the left drawing of FIG. 2B. A range where the drag operation is possible is limited to an area of the touch panel 2 of the display part 3. For example, when performing the drag operation 3 times, the display window is moved to a position 23 of FIG. 2A and the map image of the right drawing of FIG. 2B is displayed in the display part 3. At this point, the display window has not reached the position 24. Therefore, by repeating the same drag operation, the user moves the display window located at the position 23 to the position 24.

Next, the drag operation in case that the number of touched points is two is described with FIG. 2C. For example, the user performs the drag operation with two fingers in the direction of arrows from the position of the touched points 25 in the left drawing of FIG. 2C. It is possible to move the display window to the position 24 with less number of operations (for example, with about half the number of operations) compared to the drag operation with one finger.

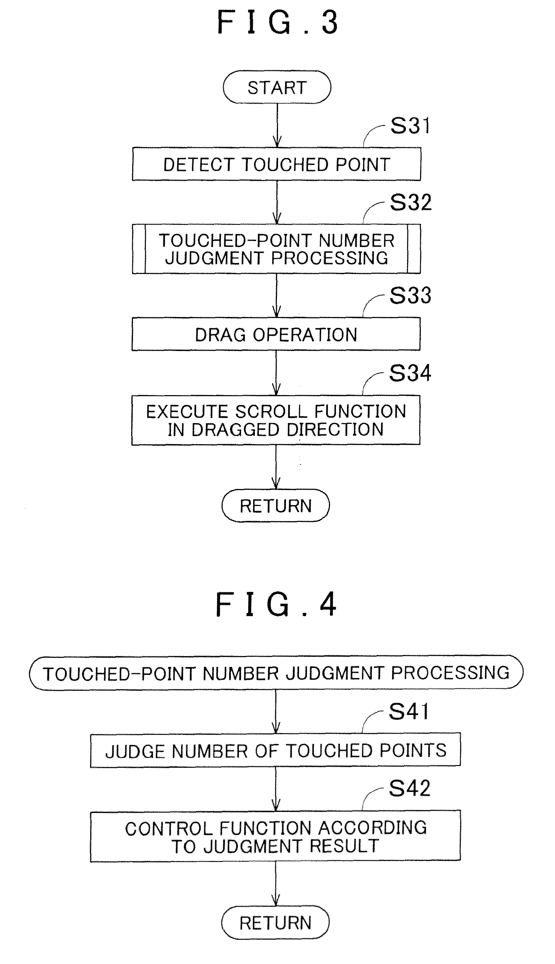

FIG. 3 is a flowchart showing a procedure of display processing according to the first embodiment. The CPU 6 detects the touched point with the touch panel 2 (S31), and executes touched point number judgment processing in the touched point number judgment part 4 toward the detected signal. FIG. 4 shows the touched point number judgment processing. At S41, the CPU 6 judges the number of touched points based on the signal detected with the touch panel 2. Here, the number of touched points means for example one point when one position is touched by the finger, as shown in FIG. 2B.

Based on the number of touched points judged at S41, the CPU 6 changes, in a function control part 5, a control volume of a function executed by an operation on the touch panel 2 according to the number of touched points (S42). Here, if the number of touched points has been judged as two points, the CPU 6 performs control such that a scroll movement volume by the drag operation, that is, the control volume of a scroll function (the predetermined function) is greater (for example, twice) than when the number of touched points has been judged as one point. When the user performs the drag operation on the touch panel 2 (S33), the CPU 6 performs in the function execution part 11 a scroll controlled by the function control part 5 (S34).

In the first embodiment, a partial image displayed on the display part 3 is a part of the map image generated from the map data, which is recorded in the recording part 9. However, the partial image is not limited to such configuration, but is only necessary to be a part of an image generated from the image data having image size over the display screen of the display part 3. For example, the present invention can be applied to a list scroll in case that there are too many items to display in the display screen in a list display.

Or, the present invention can be applied to a case that the number of touched points has changed during the drag operation. For example, when starting the drag operation with one finger and changing to the drag operation with two fingers, the control volume of the scroll function is changed according to the change of the number of touched points. In addition, the display device 1 may be built in a small portable electronic device such as a portable telephone device and a portable music player and have a small display screen. According to the above description, if the number of touched points has been judged as two points, the scroll function is controlled such that the scroll movement volume by the drag operation is twice as much as that of when the number of touched points has been judged as one point. However, any control is possible as long as the control volume of the scroll function differs according to a difference in the number of touched points.

### [Second embodiment]

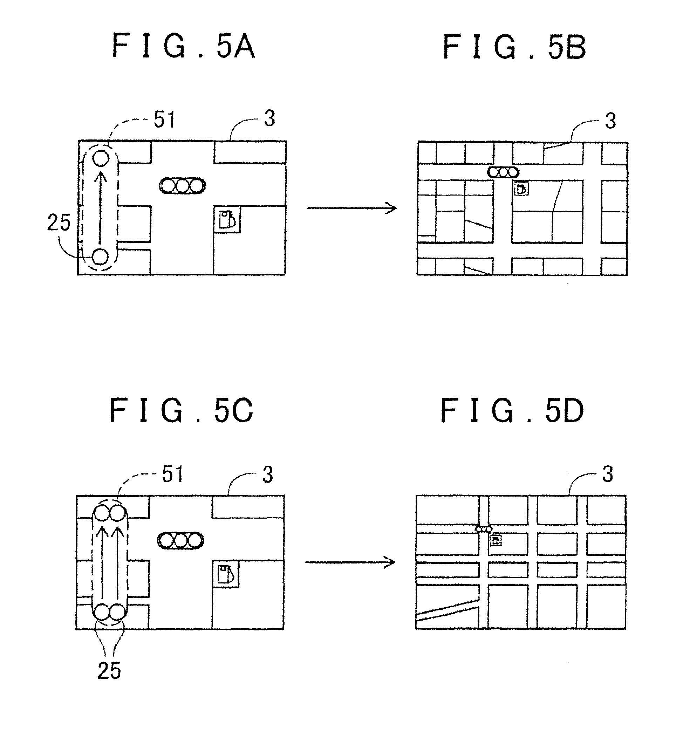

FIGS. 5A, 5B, 5C, and 5D are schematic drawings showing an example of a display screen according to a second embodiment, and show a scale change display by the drag operation. In FIG. 5A, a map image is displayed on the display part 3. In case of changing a scale on a display device provided with a touch panel, a scale change for example using a scale change bar 51 is common. The user can change the scale by touching the scale change bar 51 displayed on the display part 6 and performing the drag operation along the scale change bar 51. A changeable scale area is limited to the area on the scale change bar 51. Here, it is assumed that a scale is broadened when performing the drag operation over the scale change bar 51 along an arrow from a position of a touched point 25, as shown in FIG. 5A. For example, in FIG. 5A, when the number of touched points is one point, that is, with one finger, if performing the drag operation along the arrow from the position of the touched point 25, the scale is changed and displayed as shown in FIG. 5B. Next, when the number of touched points is two points, that is, with two fingers, if performing the drag operation as shown in FIG. 5C, the map image is displayed at a broader scale (FIG. 5D) than FIG. 5B that is displayed by a scale change with one finger, although the movement volume of the touched point is the same compared to the drag operation with one finger.

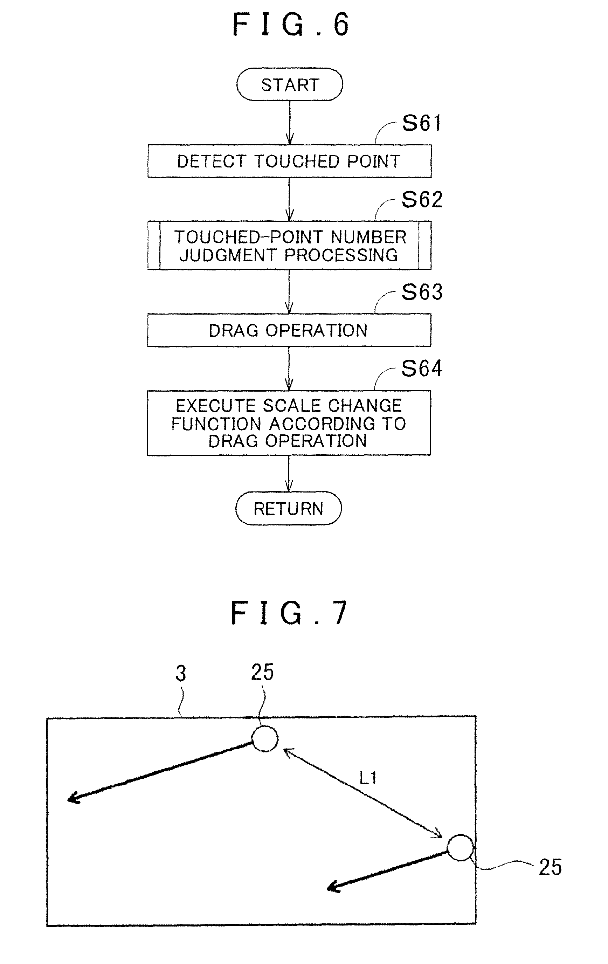

FIG. 6 is a flowchart showing a procedure of the display processing according to the second embodiment. The CPU 6 detects the touched point on the scale change bar 51 with the touch panel 2 (S61), and executes the touched-point number judgment processing toward the detected signal in the touched-point number judgment part 4 (S62). The touched-point number judgment processing is indicated in FIG. 4. At S41, the CPU 6 judges the number of touched points based on the signal detected with the touch panel 2. Here, the number of touched points means for example one point when one position is touched by the finger as shown in FIG. 5A.

Based on the number of touched points judged at S41, the CPU 6 controls in the function control part 5 the function executed by the operation on the touch panel 2 according to the number of touched points (S42). Here, if the number of touched points has been judged as two points, the CPU 6 performs control such that a scale change volume by the drag operation, that is, the control volume of a scale change function (the predetermined function) is greater (for example, twice) than when the number of touched points has been judged as one point. When the user performs the drag operation on the touch panel 2 at S63, the CPU 6 performs in the function execution part 11 a scale change controlled by the function control part 5 (S64).

In the second embodiment, the present invention can be applied to a case that the number of touched points has changed during the drag operation. For example, when starting the drag operation with one finger and changing to the drag operation with two fingers, the control volume of the scale change function is changed according to the change of the number of touched points. In addition, the display device 1 may be built in a small portable electronic device such as a portable telephone device and a portable music player and have a small display screen. According to the above description, if the number of touched points has been judged as two points, the scale change function is controlled such that the scale change volume by the drag operation is twice as much as that of when the number of touched points has been judged as one point. However, any control is possible as long as the control volume of the scale change function differs according to a difference in the number of touched points.

The present invention is not limited to the first and second embodiments, but various modifications and/or variations may be made without departing from the broad spirit and scope of the underlying principles.

For example, in the first and second embodiments, if the number of the touched points is two or more, a change of the control volume of the predetermined function may be inhibited based on a position relation of the respective touched points.

(A) For example, in the first and second embodiments, as shown in FIG. 7, if a distance L1 between touched points 25 of two fingers is equal to or more than a predetermined distance (for example, the distance is equal to or more than 4cm), the CPU 6 may be configured not to change the control volume of the predetermined function, that is, not to determine that the number of touched points has increased. Because of this configuration, it is possible to prevent false operation of the scroll or the scale change by the drag operation.

(B) For example, in the first and second embodiments, the CPU 6 may be configured to detect coordinates of the respective touched points 25 on the touch panel 2 at every predetermined time (for example, every 100 msec) and sequentially store the coordinates for the respective touched points 25 for past several tens of times (for example, for past 20 times) in chronological order in the RAM 8. Further, the CPU 6 may be configured to acquire movement directions of the respective touched points 25 based on movement tracks of the coordinates of the respective touched points 25 for the past several tens of times (hereinafter, referred to as a "movement direction acquisition unit".)

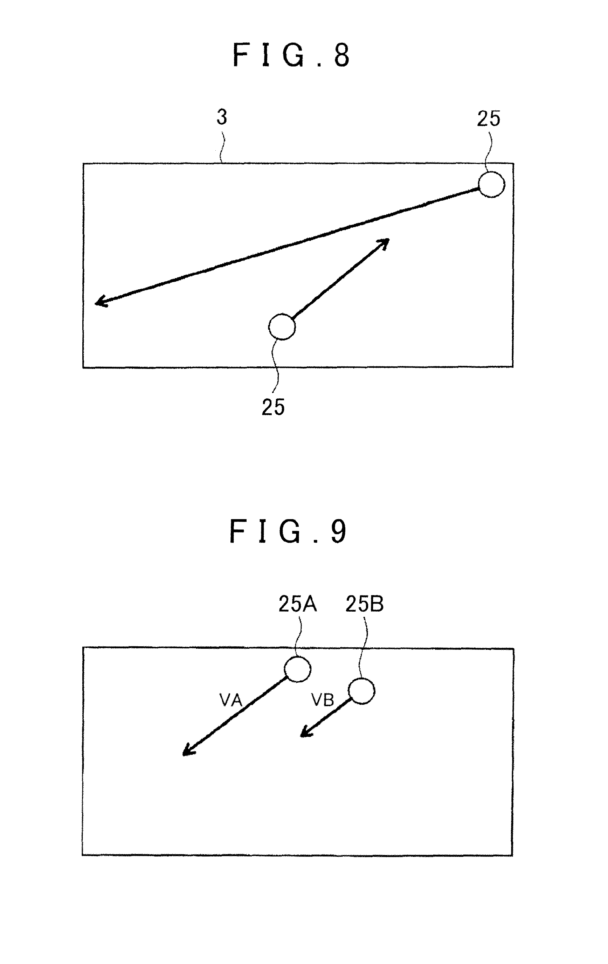

For example, as shown in FIG. 8, if the movement directions of the touched points 25 of the two fingers acquired by the movement direction acquisition unit are different, that is, if it has been determined that the movement directions are not the same, the CPU 6 may be configured not to change the control volume of the predetermined function (for example, the scroll function, the scale change function, or the like.) Because of this configuration, it is possible to prevent false operation of the scroll or the scale change by the drag operation.

(C) For example, in the first and second embodiments, the CPU 6 may be configured to detect the coordinates of the respective touched points 25 on the touch panel 2 at every predetermined time (for example, every 100 msec) and sequentially store the coordinates for the respective touched points 25 for past several tens of times (for example, for past 20 times) in chronological order in the RAM 8. Further, the CPU 6 may be configured to acquire movement speeds of the respective touched points 25 on the display screen based on current coordinates and previous coordinates of the respective touched points 25 (hereinafter, referred to as a "movement speed acquisition unit.) Or, the CPU 6 may be configured to acquire average movement speeds of the respective touched points 25 on the display screen based on the current coordinates and the coordinates of the past several tens of times of the respective touched points 25 (hereinafter, referred to as a "movement speed acquisition unit".)

For example, as shown in FIG. 9, if it has been determined that a difference between a movement speed VA (cm/sec) of a touched point 25A and a movement speed VB (cm/sec) of a touched point 25B, is equal to or more than a predetermined speed (for example, equal to or more than approximate 10 cm/sec), the CPU 6 may be configured not to change the control volume of the predetermined function (for example, the scroll function, the scale change function, or the like.) Because of this configuration, it is possible to prevent false operation of the scroll or the scale change by the drag operation.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

## Claims

1. An information display device (1) comprising:
a display part (3) that displays an image;
a touch panel (2) that is provided in front of the display part and detects a drag operation; and
a function execution unit (11) that executes a predetermined function according to the drag operation, said information display device being **characterised in that** it further comprises:
a touched point number judgment unit (4) that judges the number of touched points (25) at the drag operation detected by the touch panel; and
a function control unit (5) that changes control volume of the predetermined function to be executed by the function execution unit according to a judgment result of the touched-point number judgment unit.

2. The information display device according to claim 1, wherein
the predetermined function is a scroll function.

3. The information display device according to claim 1, wherein
the predetermined function is a scale change function.

4. The information display device according to claim 2, wherein
the function control unit (5) performs control so as to increase a movement volume of a scroll as the number of touched points (25) increases.

5. The information display device according to claim 3, wherein
the function control unit (5) performs control so as to increase a change volume of a scale change as the number of touched points (25) increases.

6. The information display device according to any one of claims 1 to 5, wherein,
if the number of touched points (25) is two or more, the function control unit (5) inhibits a change of the control volume of the predetermined function based on a position relation of the respective touched points.

7. The information display device according to claim 6, wherein,
if the number of touched points (25) is two or more and positions of the respective touched points are separated by a predetermined distance or more, the function control unit (5) does not change the control volume of the predetermined function.

8. The information display device according to claim 6, wherein,
if the number of touched points (25) is two or more and movement directions of the respective touched points are different, the function control unit (5) does not change the control volume of the predetermined function.

9. The information display device according to claim 6, wherein,
if the number of touched points (25) is two or more and a difference in movement speed between the respective touched points is a predetermined speed or more, the function control unit (5) does not change the control volume of the predetermined function.
